# EUROPEAN PATENT SPECIFICATION

(11) **EP 2 683 594 B1**
(45) Date of publication and mention of the grant of the patent: **04.01.2017**
(21) Application number: 11788803.2
(22) Date of filing: 24.11.2011
(51) Int. Cl.: B62D 25/18, B62D 25/16

(54) **WHEEL FENDER**
KOTFLÜGEL
BAVETTE DE GARDE-BOUE POUR ROUE

(30) Priority: 10.03.2011 GB 201104086
(43) Date of publication of application: 15.01.2014
(73) Proprietor: AGCO International GmbH, 8212 Neuhausen am Rheinfall (CH)
(72) Inventor: EPPLE, Johann, 87616 Marktoberdorf (DE); FREI, Paul, 87616 Marktoberdorf (DE); MAIER, Thomas, 87600 Kaufbeuren (DE)
(74) Representative: AGCO Intellectual Property Department
(86) International application number: PCT/EP2011/070919
(87) International publication number: WO 2012/119669

(56) References cited:
- DE-U1- 8 502 729
- JP-A- 2004 345 372
- US-A- 2 940 773

## Description

This invention relates to a wheel fender on an agricultural vehicle such as an agricultural tractor.

Agricultural tractors are provided with front and rear wheel fenders. The rear wheel fenders are usually attached directly to the tractor cab by bolts and the front wheel tractors are usually attached to brackets which are attached to the frame or chassis of the tractor.

The fender typically comprises a curved sheet of material having a width and two opposing longitudinal edges. The fender is typically narrower than the width of a standard tyre fitted to the tractor although certain tyres such as those used for row crop work may be narrower. The fender has an inner contour which when mounted to the tractor is proximal to the tractor and an opposing outer contour distal from the tractor. The outer contour is provided with a lip and the inner contour is provided with a flange. The lip on the outer contour extends radially inwards towards the wheel. The flange on the inner contour provides a means for attaching the fender to the tractor and the lip on the outer contour provides a means for attaching a fender extension or fender cover to the already mounted fender.

In order to reduce the pressure applied to the soil and therefore reduce the amount of ground compaction, for example when seeding, it may be necessary to mount wider tyres to the tractor or to use two tyres on one wheel hub. In such a case it is necessary to fix a fender extension to the existing fender, so that the width of the fender plus fender extension extends over the increased tyre width. The lip of the already mounted fender therefore does not extend over the increased width of the tyre or tyres and instead is in radial alignment with a part of the newly attached tyre or tyres. If the tractor is subjected to roll movement, it is possible that the lip of the outer contour of the fender, or another part of the fender comes into contact with the tyre causing damage to the tyre and fender and affecting the movement of the tractor.

It is desirable to provide a cab on a tractor which provides the driver with a great a view as possible through the side windows. It is therefore desirable to mount the fenders a low as possible to the cab so that a large a pane of glass as possible can be mounted to the sides of the cab. With this arrangement the distance between the lip and/or fender and the tyre is small and the lip and/or part of the fender may come into contact with the tyre when the tractor is subjected to roll movement.

JP 2004 345372 A discloses an agricultural working vehicle having a cab, a wheel and a fender in which the fender comprises an inner contour for attachment to the cab and a distal outer contour. The outer contour is radially inclined with respect to the inner contour.

It is an object of the present invention to provide a wheel fender for an agricultural vehicle which obviates or at least alleviates the problems associated with the prior art.

According to the invention there is provided a fender for a wheel on an agricultural vehicle having a cab as claimed in claim 1. Since the lip of the outer contour of the wheel fender is positioned at a greater radial distance from the wheel than the prior art allows, the tractor can undertake greater roll movement before the lip comes into contact with the tyre, or tyres. Moreover, the invention allows a fender to be mounted to a cab at a lower level than the prior art allows thus enabling a larger surface area of glass to be mounted to cab and improving driver visibility. Preferred features of the invention are set out in the dependent claims.

The invention will now be described, by example only with reference to the following drawings in which:
Figure 1 is a side view of a tractor fitted with a front and rear wheel fender,
Figure 1b is a more detailed perspective view of the rear wheel fender of figure 1a,
Figure 2 is a cross sectional view along line A-A of figure 1a showing a wheel fender arrangement in accordance with the invention,
Figure 3 is a more detailed view of figure 2,
Figure 4 is a cross sectional view along line D-D of figure 2,
Figure 5 is a cross sectional view along line A-A of figure 1a showing one embodiment of the wheel fender only, and
Figure 6 is a cross sectional view along line A-A of figure 1a showing a second embodiment of the wheel fender only.

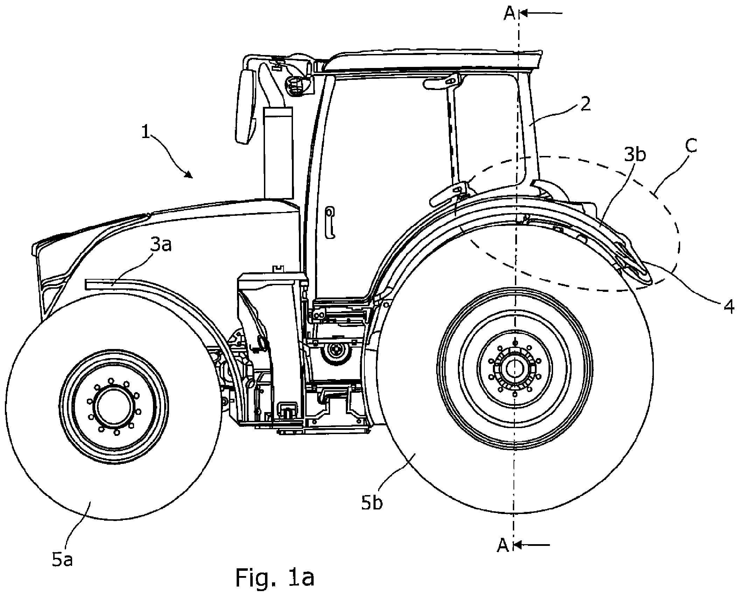

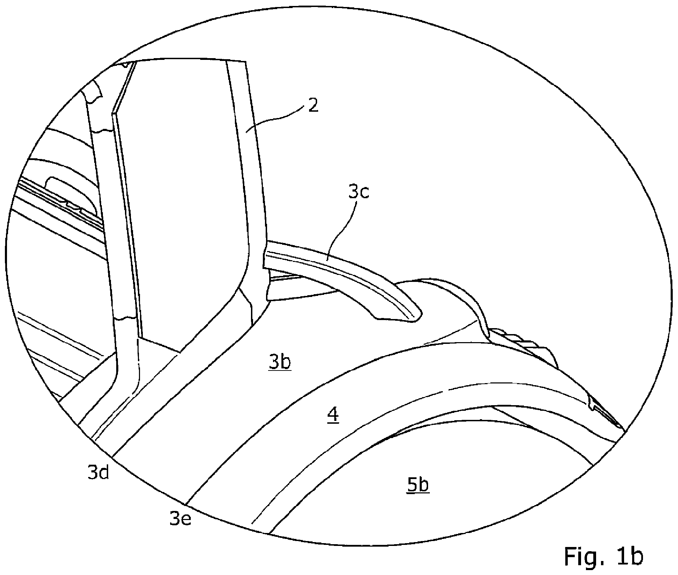

Figure 1a is a side view of a tractor 1 having a cab 2, front and rear wheels 5a and 5b with respective front and rear wheel fenders 3a and 3b. Rear wheel fender 3b is provided with a fender extension 4 which is shown more clearly in figure 1b.

Figure 1b is a more detailed perspective view of figure 1a showing the rear wheel fender 3b which has an inner contour 3d proximal to the tractor. The fender has an outer contour 3e which is distal from the tractor. The inner contour is provided with a flange 3g for attaching the fender to the tractor. Flange 3g is attached to the tractor cab 2. The outer contour is provided with a lip 3h (not visible in figure 1b). The lip 3h on outer contour 3e extends radially inwards towards the wheel 5b substantially perpendicular to the plane of the outside surface 3i of the fender. The flange 3g on inner contour 3d provides means for bolting the fender 3b to the cab 2. The lip 3h on the outer contour provides means for connecting a fender extension 4 to it. (In the case of the tractor fitted with a narrow tyre, a fender cover may be attached to lip 3h instead of a fender extension. This is done mainly for aesthetic reasons). The tractor 1 is also provided with a fender bracket 3c which provides a base onto which a light or mirror may be mounted.

The fender has four edges. Two arced edges of differing lengths and two edges of the same length defining the width of the fender.

By inner and outer contours it is meant the arced edges of the fender 3b from which the flange 3g and lip 3h extend respectively.

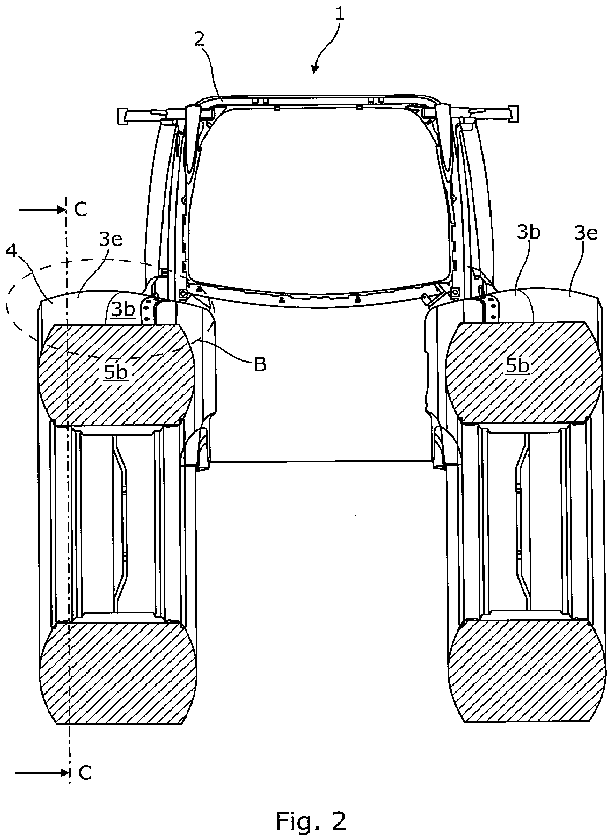

Figure 2 is a cross sectional view of figure 1a along line A-A showing a fender arrangement in accordance with the invention. It is easier to see that a wheel 5b wider than the width of fender 3b has been fitted. This has the consequence that fender extension 4 must be fitted to lip 3h to increase the overall width of the fender. Since a wheel wider than the width of fender 3b has been fitted, lip 3h protrudes radially inwards towards the wheel in alignment with a part of the wheel. However, in accordance with the invention, the fender 3b is radially inclined so that the under surface 3j of fender 3b at the outer contour 3e is spaced further away from the wheel 5b than the under surface of the inner contour 3d. In other words the radius of the outer contour 3h is greater than the radius of the inner contour 3d. This has the effect that lip 3h is not as close to the wheel 5b as with the prior art and therefore the tractor can tolerate greater roll movement before the lip 3h interferes with the wheel 5b.

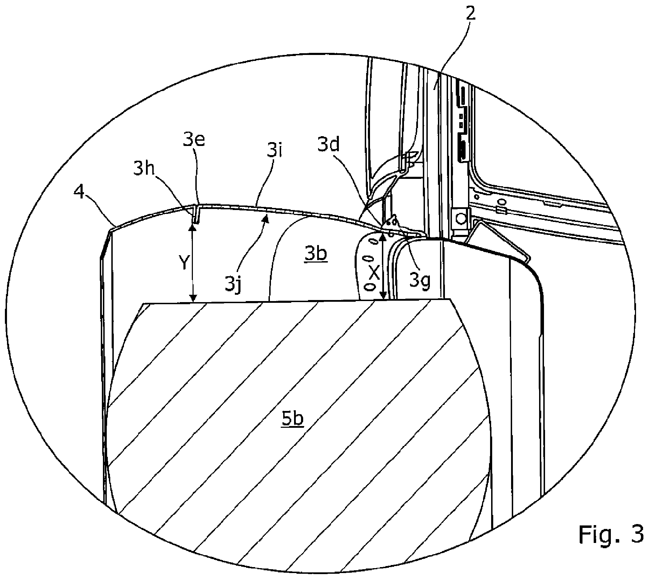

Figure 3 shows the area referenced B in figure 2 in greater detail. Because the fender 3b is radially inclined from the inner contour 3d to the outer contour 3e, the free end of lip 3h of the outer contour 3e is spaced further away from the wheel 5b (indicated as distance Y in figure 3) than the distance of inner contour 3d from wheel 5b (indicated as distance X in figure 3). Distance Y is measured perpendicular to a surface of the outer contour and distance X is measured perpendicular to a surface of the inner contour. Lip 3e extends radially inwardly towards the wheel 5b. It can be seen that if the fender 3b was not radially inclined the lip 3h would protrude closer to the wheel than both flange 3g and inner contour 3d and thus interfere with the wheel 5b during roll movement of the tractor.

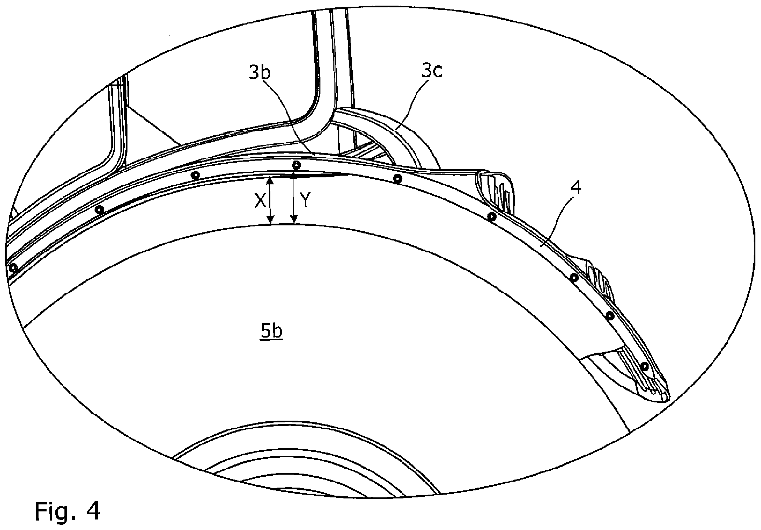

Figure 4 is a cross sectional view along line D-D of figure 2 showing the space between the outer contour 3e of the fender and the wheel 5b is greater than the space between the inner contour 3d and the wheel 5b.

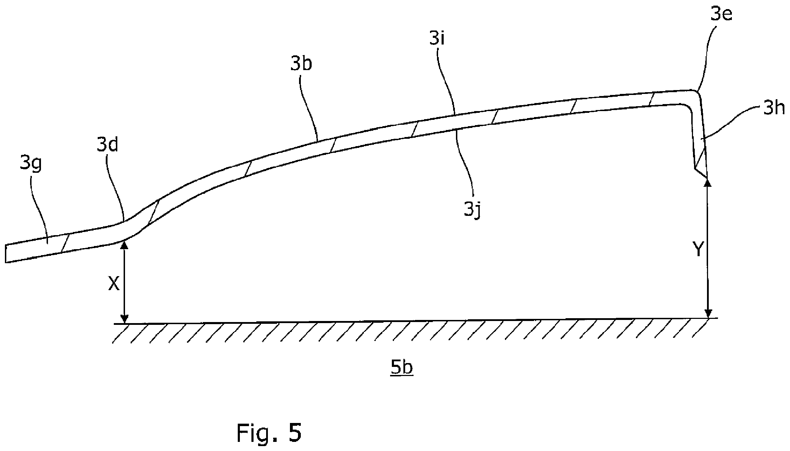

Figure 5 is a cross sectional view of the rear wheel fender along line A-A of figure 1a showing the shape of the rear right hand side fender only. As can be seen, flange 3g is radially inclined at a gentle angle until inner contour 3d. From inner contour 3d the fender is radially inclined at a steeper angle and has a convex outer surface 3i. Outer contour 3e is provided with a lip 3h which is radially inclined towards the wheel. Lip 3h is substantially perpendicular to the plane of the outer surface 3i of fender 3b.

In the shown embodiment lip 3h is perpendicular to the plane of outer surface 3i. It is envisaged that the lip 3h may be parallel or inclined in any specific angle towards outer surface 3i without leaving the scope of the invention.

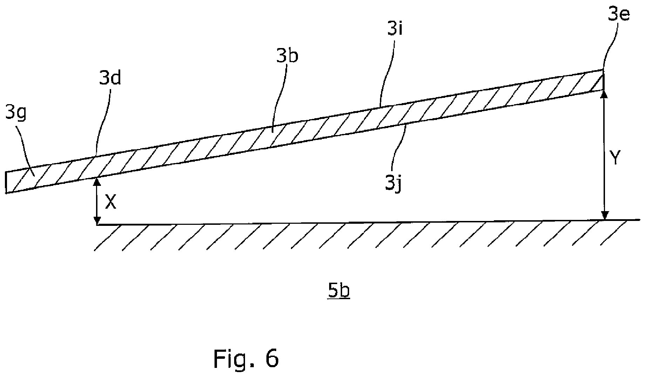

Figure 6 shows a cross sectional view of a second embodiment of the fender in which the flange 3g and upper surface 3i of the fender 3b are inclined at the same angle. In this embodiment fender 3b is not provided with a lip.

The use of a fender in accordance with the invention has the advantage that the tractor can experience greater roll movement without the fender coming into contact with a tyre than the prior art allows.

Moreover the fender can be fitted to the cab at a lower height than the prior art allows (thus giving the driver a clearer view through the side windows of the cab.)

## Claims

1. A fender (3b) for a wheel (5a) on an agricultural vehicle (1) having a cab (2), said fender comprising an inner contour (3d) for attachment to the cab (2) and a distal outer contour (3e), wherein the outer contour (3e) is radially inclined with respect to the inner contour (3d) **characterised in that** the outer contour (3e) is provided with a lip (3h) which extends radially inwards towards the wheel (5a) and wherein the distance between a free end of the lip (3h) and the wheel (5a) is greater than the distance between the inner contour (3d) and the wheel (5a), said distances measured along lines extending perpendicularly from the surfaces of the outer and inner contours (3e, 3d) respectively.

2. A fender (3b) as claimed in claim 1 wherein the outer surface of the fender (3i) is convex.

3. A fender (3b) as claimed in any preceding claim wherein the distance between an under surface (3j) of the outer contour (3e) and the wheel (5a) is greater than the distance between an under surface of the inner contour (3d) and the wheel (5a), said distances measured along lines extending perpendicularly from the under surfaces of the outer and inner contours (3e, 3d) respectively.

4. A tractor (1) having a fender (3b) as claimed in any preceding claim.

## Patentansprüche

1. Kotflügel (3b) für ein Rad (5a) eines landwirtschaftlichen Fahrzeugs (1) mit einer Kabine (2), wobei der Kotflügel eine innere Kontur (3d) zur Befestigung an der Kabine (2) und eine distale äußere Kontur (3e) aufweist, wobei die äußere Kontur (3e) relativ zu der inneren Kontur (3d) radial ansteigt, **dadurch gekennzeichnet, dass** die äußere Kontur (3e) mit einer Lippe (3h) versehen ist, die sich radial nach innen in Richtung des Rads (5a) erstreckt, und wobei der Abstand zwischen einem freien Ende der Lippe (3h) und dem Rad (5a) größer als der Abstand zwischen der inneren Kontur (3d) und dem Rad (5a) ist, wobei die Abstände zwischen Linien gemessen werden, die sich senkrecht von den Oberflächen der äußeren Kontur (3b) bzw. der inneren Kontur (3d) erstrecken.

2. Kotflügel (3b) nach Anspruch 1, wobei die äußere Oberfläche (3i) des Kotflügels konvex ist.

3. Kotflügel (3b) nach einem der vorhergehenden Ansprüche, wobei der Abstand zwischen einer unteren Oberfläche (3j) der äußeren Kontur (3e) und dem Rad (5a) größer als der Abstand zwischen einer unteren Oberfläche der inneren Kontur (3d) und dem Rad (5a) ist, wobei die Abstände zwischen Linien gemessen werden, die sich senkrecht von den unteren Oberflächen der äußeren Kontur (3b) bzw. der inneren Kontur (3d) erstrecken.

4. Traktor (1) mit einem Kotflügel (3b) nach einem der vorhergehenden Ansprüche.

## Revendications

1. Garde-boue (3b) destiné à une roue (5a) sur un véhicule agricole (1) comportant une cabine (2), ledit garde-boue présentant un contour interne (3d) destiné à être fixé sur la cabine (2) et un contour externe distal (3e), dans lequel le contour externe (3e) est incliné radialement par rapport au contour interne (3d) **caractérisé en ce que** le contour externe (3e) comporte une lèvre (3h) qui s'étend radialement vers l'intérieur, vers la roue (5a) et dans lequel la distance entre une extrémité libre de la lèvre (3h) et la roue (5a) est supérieure à la distance entre le contour interne (3d) et la roue (5a), lesdites distances étant mesurées respectivement le long des lignes s'étendant perpendiculairement à partir des surfaces des contours externe et interne (3e, 3d).

2. Garde-boue (3b) selon la revendication 1 dans lequel la surface externe du garde-boue (3i) est convexe.

3. Garde-boue (3b) selon l'une quelconque des revendications précédentes, dans lequel la distance entre une surface inférieure (3j) du contour externe (3e) et la roue (5a) est supérieure à la distance entre une surface inférieure du contour interne (3d) et la roue (5a), lesdites distances étant mesurées respectivement le long des lignes s'étendant perpendiculairement à partir des surfaces inférieures des contours externe et interne (3e, 3d).

4. Tracteur (1) comportant un garde-boue (3b) selon l'une quelconque des revendications précédentes.
